# EUROPEAN PATENT APPLICATION

(11) **EP 1 614 518 A2**
(43) Date of publication of application: **11.01.2006**
(21) Application number: 05105341.1
(22) Date of filing: 17.06.2005
(51) Int. Cl.: B29C 45/14, B29C 45/16, H01F 41/12

(54) **Process for manufacturing electric coils, moulding equipments used for said process, and electric coils and their components manufactured through said process**

(30) Priority: 07.07.2004 IT TO20040462
(71) Applicant: ELTEK S.p.A., I-15033 Casale Monferrato (Alessandria) (IT)
(72) Inventor: Colombo, Paolo, 15033 Casale Monferrato AL (IT); Zorzetto, Mauro, 15033 Casale Monferrato AL (IT)
(74) Representative: Gallarotti, Franco

(57) **Abstract**

In a process for the production of an electric coil (1), a bobbin (2) made of a first material, provided with a respective electric winding (3), is set in a mould (20) and injected into the latter is a second material (F'), which is to constitute a coating (4) for the winding (3) and part of the bobbin (2). The second material (F') is injected into the mould (20) at a temperature such as to bring about local melting of the first material (F) at end portions of thin configuration of respective projections (6a-6c, 7a-7c), forming part of a labyrinth-seal profile of the bobbin (2), with consequent local amalgamation of the first material (F') with the second material (F) in the area of said profile.

## Description

The present invention relates to the production of electric coils provided with a protective and sealing coating.

Coils of the type referred to typically comprise a moulded bobbin made of thermoplastic material, wound on which is a certain amount of electrical wire, which is to form a winding; subsequently, overmoulded on the winding and the bobbin is a layer consisting of additional thermoplastic material, which forms a protective and sealing coating.

The variations in volume of moulded parts made of thermoplastic material, which passes from the molten state (substantially at the temperature of injection of the material into the mould) to the solid state (substantially at room temperature) are at times of an important amount, above all in the case of coils of small dimensions; this causes significant volumetric shrinkage of the moulded parts, which, together with the internal stresses, frequently generates flaws or cracks, i.e., areas of potential infiltration of liquids, humidity and dirt, with consequent malfunctioning of the coil or of the system that integrates it.

In order to reduce the aforesaid risks of infiltration, it has been proposed to provide labyrinth paths between the bobbin carrying the winding and the respective coating. The document No. US-A-3,268,645 describes, for example, a process of fabrication of a coil, the bobbin of which has a plurality of grooves on the circumferential surface of the respective end flanges, in which parts of the material which is to form the overmoulded coating are designed to work their way in order to improve the characteristics of seal of the product. In said solution, shrinkage of the overmoulded material is exploited so that the latter is compressed on the surfaces of the bobbin in which the aforesaid grooves are defined, which form in this way a sort of seal labyrinth.

Following upon practical simulations, the present applicant has found that, even in the presence of seal labyrinths, coils of a known type are not immune from risks of infiltration, above all when they are used in particularly severe working conditions, such as ones characterized by high humidity and/or environmental dirt. For example, in the case of use of a coil of the known type in fuel-injection systems for motor vehicles, the conditions of high humidity, high vibrations and high thermal stresses to which the components of the coil, including its thermoplastic coating, are subjected can jeopardize reliability of the device in the long run.

In its general terms, the purpose of the present invention is to solve the aforesaid problems of the prior art, and in particular to obtain a coil provided with an improved protective and sealing coating presenting a high reliability over time.

The above and yet other purposes, which will emerge clearly from what follows, are achieved according to the present invention by a process for the production of electric coils, by moulding equipments used in said process, and by coils and components of coils having the characteristics specified in the annexed claims, which are to be understood as forming an integral part of the present description.

Further purposes, characteristics and advantages of the present invention will emerge clearly from the ensuing detailed description and the annexed plate of drawings, which is provided purely by way of explanatory and non-limiting example, and in which:
- Figure 1 is a schematic plan view of a coil made according to the invention;
- Figure 2 is a schematic cross-sectional view according to the axis II-II of Figure 1;
- Figure 3 is a perspective view of a component of the coil of Figure 1;
- Figure 4 is a schematic cross-sectional view of the component of Figure 3;
- Figure 5 is a schematic plan view of the component of Figure 3, with the addition of some further items;
- Figure 6 is a schematic cross-sectional view according to the axis VI-VI of Figure 5;
- Figures 7 and 8 are schematic cross-sectional views of a moulding equipment designed for the fabrication of the component of Figure 3, during a first operating step and a second operating step, respectively;
- Figure 9 is a schematic cross-sectional view of a moulding equipment designed for the fabrication of at least part of the coil of Figure 1, during a respective first operating step;
- Figure 10 and 11 are, respectively, a first enlarged detail and a second enlarged detail of Figure 9;
- Figure 12 is a schematic cross-sectional view of the equipment of Figure 3, during a respective second operating step;
- Figure 13 is a schematic cross-sectional view of a possible variant of the equipment illustrated in Figures 7 and 8;
- Figures 14 and 15 are partial views of a first enlarged detail and a second enlarged detail of Figure 13;
- Figure 16 is a schematic partial cross-sectional view of a component similar to that of Figure 3, but obtained with the equipment represented in Figure 13;
- Figures 17 and 18 are partial views of details similar to those of Figures 14 and 15, corresponding to a further possible variant of the invention; and
- Figures 19, 20 and 21 are a perspective view, a front view, and a cross-sectional view, respectively, of a coil made according to a possible variant of the invention.

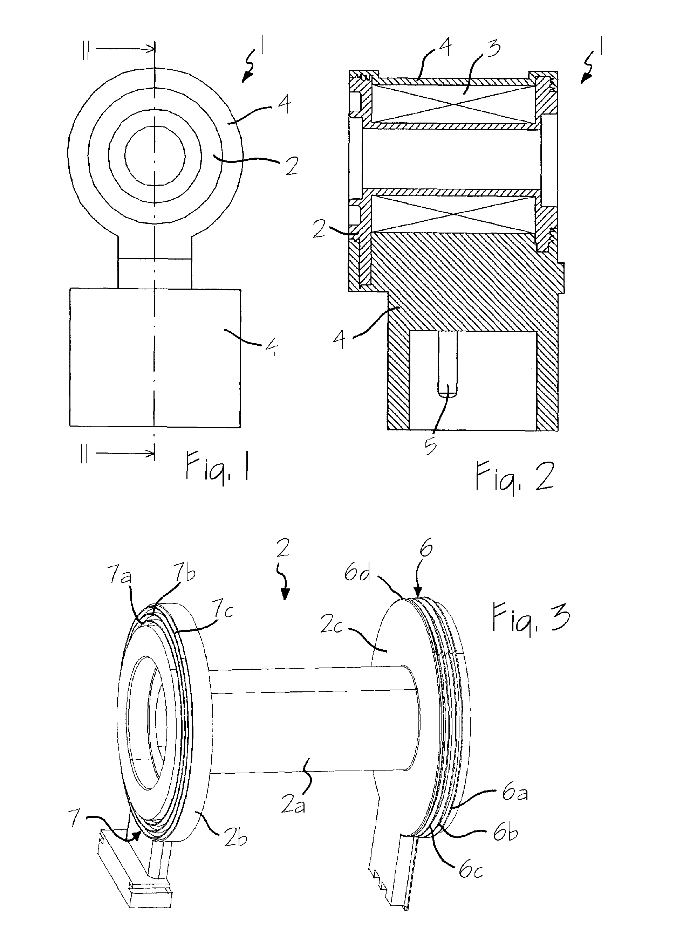

Figures 1 and 2 are schematic illustrations of an electric coil made according to the invention, designated as a whole by 1, comprising a bobbin 2 wound on which is a certain amount of electrical wire, which forms a winding 3, protected by an overmoulded coating 4 made of thermoplastic material; connected to the winding 3, i.e., to the ends of the electrical wire that forms it, are corresponding electrical terminals, one of which is designated by 5.

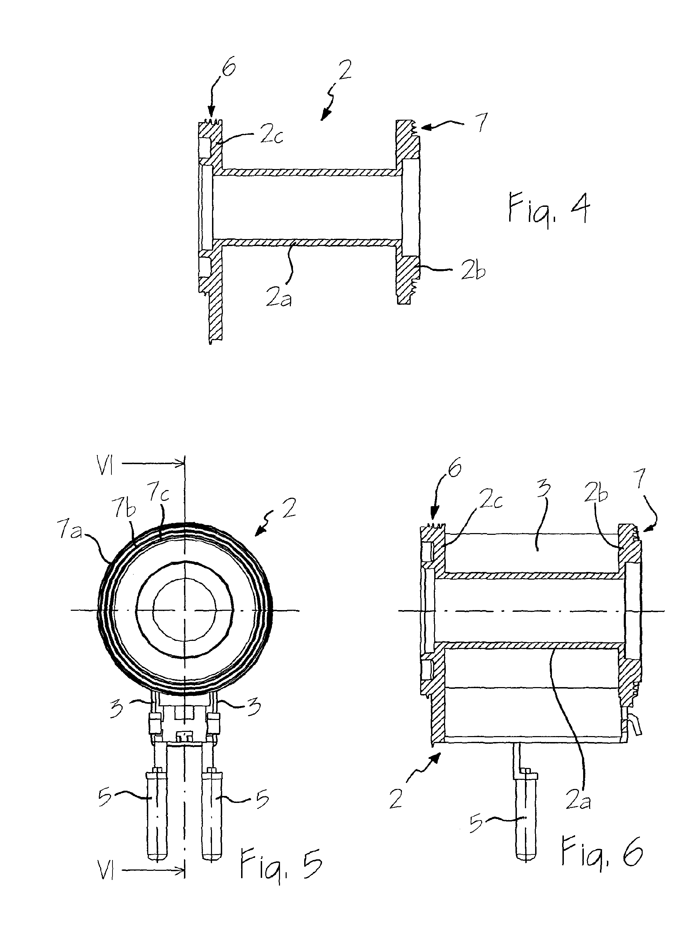

Figures 3 and 4 are schematic representations of the bobbin 2 alone, the main body of which substantially comprises a cylindrical central portion 2a, on which the aforesaid electric wire is to be wound, and two lateral flanges 2b, 2c, designed to contain the winding 3, i.e., to prevent sliding of the layers of the winding 3 set on top of one another.

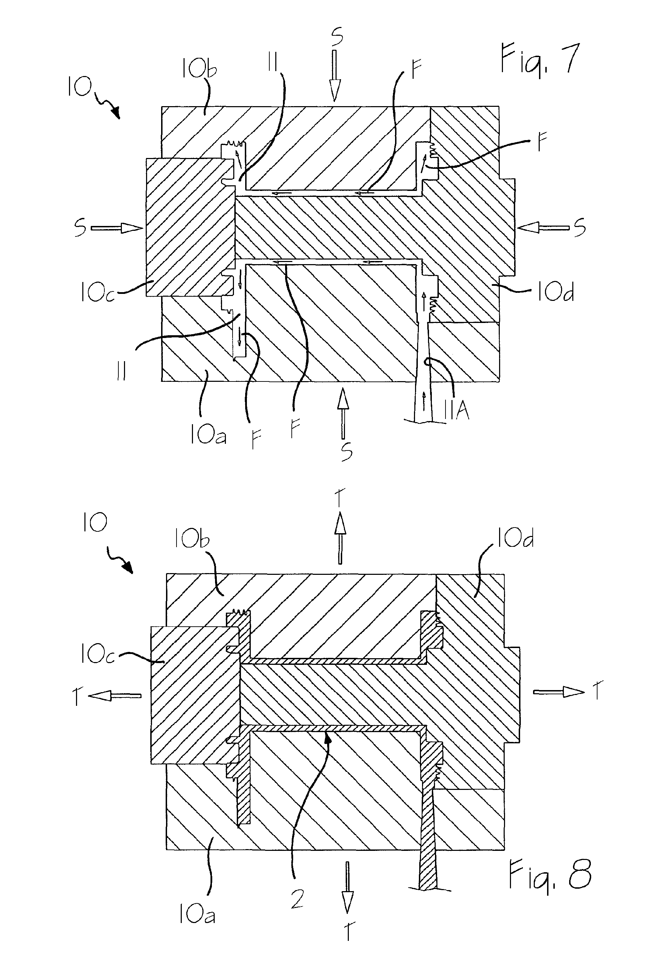

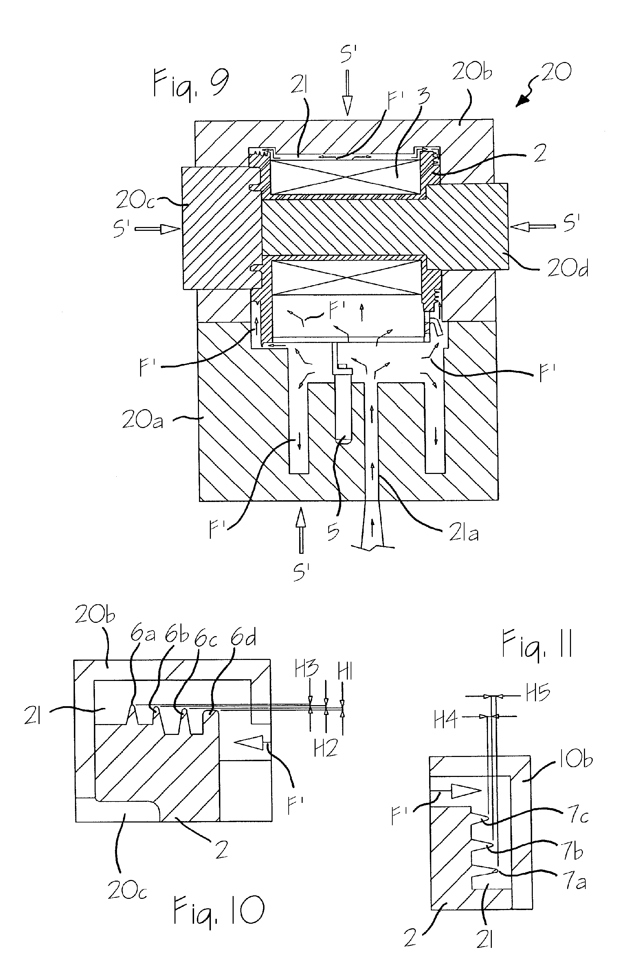

The body of the bobbin 2 is preferably made of a single piece, via injection of thermoplastic material in specially provided moulding equipment, described hereinafter with reference to Figures 7 and 8. The body of the bobbin 2 thus obtained is then equipped, with modalities in themselves known, with the respective electrical terminals 5 and the winding 3, as may be seen in Figures 5 and 6; the semi-finished product thus obtained is subsequently inserted into specially provided equipment for overmoulding of the coating 4, described hereinafter with reference to Figures 9 and 12.

According to the main aspect of the present invention, the coil 1 is provided with an improved seal structure between the bobbin 2 and overmoulded coating 4, obtained by means of a plurality of projecting profiles of the bobbin, which are to fuse partially with the thermoplastic material that is to form the coating 4, during the respective overmoulding step.

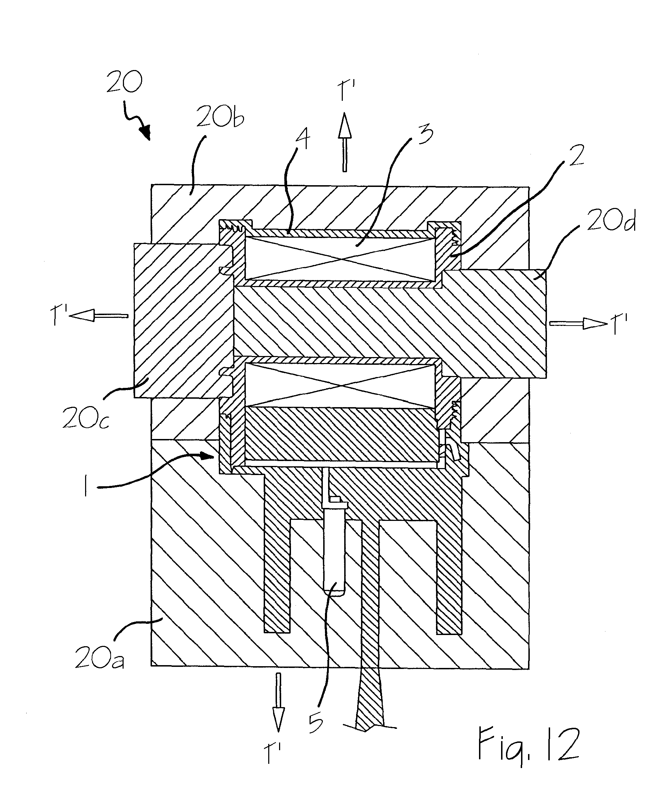

The aforesaid profiles, designated as a whole by 6 and 7 in Figure 3, each comprise a plurality of projections 6a, 6b, 6c and 7a, 7b, 7c (see also Figures 10 and 11), provided along suitable areas of the body, and in particular of the flanges 2c and 2b, of the bobbin 2; the projections of each profile 6, 7 are preferably set alongside, and/or parallel to, one another, i.e., lie on planes or surfaces parallel to, or equidistant from, one another, or else are concentric with respect to one another. Said projections of each profile 6, 7 have a prevalently annular shape, or with a substantially closed profile, in such a way as to surround the area of the body and/or of the respective flange 2b, 2b in which the seal is to be formed.

As will appear more clearly from what follows, according to a particularly advantageous aspect of the invention, the projections 6a, 6b, 6c and 7a, 7b, 7c, have a pointed or tapered section, or in any case have an end area of narrow section, sufficiently thin as to enable its respective melting with, or by, the thermoplastic material which is to form the coating 4. In the preferred embodiment of the invention, the annular projections 6a, 6b, 6c and 7a, 7b, 7c have, within the respective profiles 6, 7 a steplike pattern, i.e., are made in such a way that the respective end areas or tips lie at different heights, for the purposes that will be clarified in what follows.

Figure 7 is a schematic representation of an equipment, designated by 10, used for moulding thermoplastic material for the formation of the body of the bobbin 2.

The moulding equipment or mould 10 comprises a plurality of mobile parts, designated by 10a, 10b, 10c and 10d, designed to move between at least two respective positions, i.e., a working position, or closing position, and an opening position, according to modalities in themselves known. As in the case of the known art, the mobile parts 10a - 10d have respective impressions, shaped to define as a whole a common cavity within the mould 10, when closed with respect to one another in the working position. Said cavity, designated by 11, is designed to receive the thermoplastic material which is to form the body of the bobbin 2 and is on the whole shaped in such a way as to define the shape of said component. In the case exemplified, the impression of the elements 10b and 10d hence comprises a plurality of grooves having a shape that is substantially complementary to that of the profiles 6 and 7 that are to be obtained.

Figure 7 represents the working position of the mould 10, in which the mobile parts 10a, 10b, 10c and 10d are in their respective closed condition. Said mobile parts are pushed and held in said position by respective forces, generated with means in themselves known, indicated schematically by the arrows S, such as to contrast the pressure of the flow of the molten thermoplastic material which is to form the body of the bobbin 2. Said molten material, represented schematically by the arrows F in Figure 7 (which likewise indicate an example of the direction and/or the path followed by the material within the cavity 11) is injected within the cavity 11 via a suitable injection channel 11a.

A possible moulding sequence to obtain the body of the bobbin 2 could comprise the following steps:
i) approaching of the mobile parts 10a and 10b, under the thrust of the respective forces S, up to a pre-determined position;
ii) closing of the mobile parts 10c and 10d, under the thrust of the respective forces S, with which a portion of the part 10d bears upon a respective contrast surface of the part 10b and the part 10c is inserted into a respective passage delimited between the parts 10a and 10b, then to bear upon an end surface of the part 10d;
iii) introduction of the thermoplastic material F into the injection duct 11a, which is in direct communication with the cavity 11, up to filling of the latter; said condition is visible in Figure 8;
iv) waiting for enabling cooling and consequent solidification of the material F, which thus forms the body of the bobbin 2;
v) opening of the mobile parts 10c and 10d of the mould 10, which are moved away from the parts 10a, 10b via respective tensile forces, obtained with means in themselves known and represented schematically by the arrows T in Figure 8;
vi) opening of the mobile parts 10a and 10b, which are moved away under the action of respective forces T; and
vii) extraction from the part 10a of the item obtained, i.e., of the body of the bobbin 2.

The body of the bobbin 2 obtained using the moulding process described above is provided with the winding 3 and with the respective terminals 5, in order to assume the configuration visible in Figures 5 and 6. On said semi-finished product there is subsequently overmoulded the coating 4. Figure 9 in fact is a schematic representation of a piece of equipment or mould 20 used for overmoulding the coating 4 of thermoplastic material on the bobbin 2 provided with the winding 3 and the terminals 5.

Also the mould 20 comprises a plurality of mobile parts, designated by 20a, 20b, 20c and 20d, which are designed to move between at least two respective positions, i.e., a working or closed position, and an open position, according to modalities in themselves known. The mobile parts 20a - 20d have respective impressions, shaped for delimiting as a whole a common cavity within the mould 20, when closed with respect to one another in the working position. Said cavity, designated by 21, is in particular provided for receiving the thermoplastic material which is to form the overmoulded coating 4, defining its respective external shape.

Figure 9 represents the working position of the mould 20, in which the mobile parts 20a, 20b, 20c and 20d are in their respective closed condition. Said mobile parts are pushed and held in said position by respective forces, indicated schematically by the arrows S', which are such as to contrast the pressure of the flow of the molten thermoplastic material which is to form the overmoulded coating 4. Said molten material, represented schematically by the arrows F' (which likewise indicate an example of the direction and/or path followed by the material within the cavity 21) in Figure 9, is injected into the cavity 21.

A possible moulding sequence to obtain the coil 1 could comprise, for example, the following steps:
i) insertion of the bobbin 2, on which the respective electrical terminals 5 and the winding 3 have been assembled, within a respective part of mould, for example the mobile part 20a;
ii) closing of the mobile part 20b, through which the latter is brought substantially to mate with the part 20a, under the thrust of the respective forces S';
iii) closing of the mobile parts 20c and 20d, under the thrust of the respective forces S', said parts being substantially inserted in respective passages formed in the mobile part 20b;
iv) introduction of the thermoplastic material F' into an injection duct of the mould 20, designated by 21a, which is in direct communication with the cavity 21;
v) filling of the cavity 21 and subsequent waiting in order to enable cooling and consequent solidification of the material F', which thus forms the coating 4; said condition is shown in Figure 12;
vi) opening of the mobile parts 20c and 20d of the mould 20, said mobile parts being substantially extracted from the part 20b by respective forces indicated schematically by the arrows T' in Figure 12;
vii) opening of the mobile part 20b, which is moved away from the element 20a under the action of the respective force T';
viii) extraction from the part 20a of the item obtained, i.e., the coil 1 with the respective overmoulded coating 4.

Figures 10 and 11 show respective enlarged details of the equipment of Figure 9, which correspond to the areas of the bobbin 2 in which the projecting profiles 6, 7 are defined.

In particular, Figure 10 shows the projecting profile 6 defined at the radial end of the flange 2c of the bobbin 2, i.e., along the circumferential edge of the flange itself. As may be readily understood, the profile 6 comprises the three projections 6a, 6b and 6c, each of which has an at least in part tapered shape, with a thin end. As has already been mentioned above, said ends or tips have a steplike arrangement, i.e., they lie at different heights. In the specific case, the tip of the projection 6a lies at the greatest height, the tip of the projection 6c lies at the lowest height, and the tip of the projection 6b lies at an intermediate height. In Figure 10 the difference in height between the projections 6a and 6b is designated by H3, and the difference in height between the projections 6b and 6c is designated by H2. Finally, H1 designates the difference of height between the projection 6c and a further front projection, designated by 6d, not necessarily having a pointed or tapered shape. Said further front projection 6d could even be a generic obstacle to said flow of the molten material F' and, in said embodiment which is considered preferential, said projections 6a-6c have a height H1-H3 greater than that of said front projection or obstacle 6d.

Figure 11 shows, instead, the projecting profile 7, made on the face of the flange 2b facing the outside of the bobbin 2. As may be readily understood, the profile 7 comprises the three projections 7a, 7b and 7c, which, like the projections 6a, 6b and 6c, have an on the whole tapered shape with a thin tip. Also the projections 7a, 7b and 7c present a steplike arrangement, i.e., with tips at heights different from one another. In the specific case, the tip of the projection 7a lies at the greatest height, the tip of the projection 7b lies at an intermediate height, and the tip of the projection 7c lies at the smallest height. In Figure 11, the difference of height between the projections 7a and 7b is designated by H5, whilst the difference of height between the projections 7b and 7c is designated by H4.

During the process of overmoulding, as may be seen in Figure 9, the material F' is molten and injected into the mould 20 at a pre-defined temperature, such as to be able to melt at least part of the material of the bobbin 2, and in particular melt at least said ends or tips of the projections constituting the profiles 6 and 7.

The aforesaid steplike arrangement of the tips of the projections 6a-6c and 7a-7c enables the flow of the material F' to impinge easily upon all the tips, in order to guarantee ease of re-melting and mixing thereof with the overmoulding material F'. In particular, as may be noted from the details of Figures 10 and 11, the tips of the projections are at progressively increasing heights according to the direction or sense with which the flow of the molten material F' arrives in the cavity 21 of the mould 20. In other words, the projections that are impinged upon first by the flow of molten material F' are at a height lower than those that are impinged upon by the same flow at a subsequent moment. In this way, all the tips of the annular projections 6a-6c and 7a-7c can be certainly impinged upon by the overmoulding material so as to be able to obtain a good re-melting thereof and hence englobing thereof with the overmoulding material. This enables guarantee of a high level of tightness or hermetic seal of the area involved in said re-melting, since, in effect, the bobbin 2 and the overmoulding material melt and penetrate one another to form a single body.

The area of re-melting of the tips of the projections 6a-6c and 7a-7c, which envelop specific areas of the bobbin 2, thus enables a perfect area of hermetic seal to be obtained between the bobbin 2 and the overmoulded coating 4, in order to prevent any infiltration towards the internal parts, such as for example the winding 3. It goes without saying that the residual lower part of the projections 6a - 6c and 7a - 7c, not subjected to re-melting, will constitute a seal-labyrinth path.

The cavities of the moulds 10 and 20, and in particular the impressions of the respective parts, are conceived in such a way that the height of the projections 6a - 6c and 7a - 7c is comprised between 10% and 90%, preferably between 30% and 70%, of the thickness that the overmoulded coating 4 is to have in the respective area in a position corresponding to the profiles 6 and 7. The cavity of the mould 10, and in particular the impressions of its parts, are conceived in such a way that the tips of the projections 6a - 6c and 7a - 7c, i.e., their thin-end parts will have a radius or a width smaller than 0.2 mm, preferably smaller than 0.06 mm.

In the preferred embodiment of the invention, the material F' used for forming the overmoulded coating 4 is polyphenylene sulphide (PPS). Said material presents an excellent combination of properties, such as high resistance to loads, resistance to wear, and dimensional stability even in the case of exposure to environments characterized by the presence of chemical agents and high temperatures.

The use of PPS proves particularly advantageous above all in order to enable a uniform and fast distribution of the flows of the overmoulding material F', preventing this from cooling down excessively along said path. In this perspective, it is pointed out that characteristics proper to PPS are high fluidity and low thermal conductivity, which hence enable the material to arrive in the molten state in remote areas of the piece. A low thermal conductivity leads to a small dissipation of temperature between the molten material F' and the mould 20, during its passage in the mould itself, which is typically at a temperature lower than that of the molten material.

In the specific case of the application proposed herein, an excessive dissipation of temperature of the molten material F' could jeopardize its capacity for melting correctly the ends or tips of the annular projections 6a - 6c, 7a - 7c, hence preventing proper mixing between the material of the bobbin 2 and the overmoulding material, with consequent reduced sealing capacity. In addition, in the case of passages or very small thicknesses, for example between the bobbin 2 and the mould 20 in which the bobbin is inserted, there could be created an anomalous cooling of the thermoplastic material in intermediate areas, in effect creating a blockage for the material that should reach the most peripheral areas.

Practical tests conducted have made it possible to ascertain that the use of PPS as overmoulding material enables the aforesaid problems to be overcome.

In the preferred embodiment, also the material used to form the bobbin 2 is PPS, i.e., a material similar or in any case compatible with the overmoulding material F', in such a way that the two materials can amalgamate with respect to one another and/or form the desired seal area or areas. The aforementioned high fluidity of PPS has proven advantageous also for obtaining profiles 6 and 7 with tapered end projections 6a-6c, 7a-7c that are very thin and hence such as be easily re-melted for the purposes of the invention. For this purpose, the molten material F', injected into the mould 20, will have a temperature equal to or higher than the melting temperature of the material constituting the bobbin 2 so as to re-melt the ends of the aforesaid projections. In particular, to obtain a correct melting of the material it is preferable for the temperature of the front of the molten material F' that impinges upon the ends of the bobbin 2 provided with the profiles 6, 7 to be higher than the melting temperature of PPS by some tens of degrees. In the preferred embodiment of the invention, this is obtained through a correct thermal conditioning of the mould 20 and a correct setting of the moulding temperatures and pressures.

Figures 13-15 illustrate a possible variant of the mould 10, aimed at enabling a different geometry of the tips of at least one of the projections 6a to 6c and 7a to 7c with respect to the one exemplified above to be obtained; in said figures, the same reference numbers as those appearing in Figure 8 are used to indicate elements that are equivalent to those already described previously.

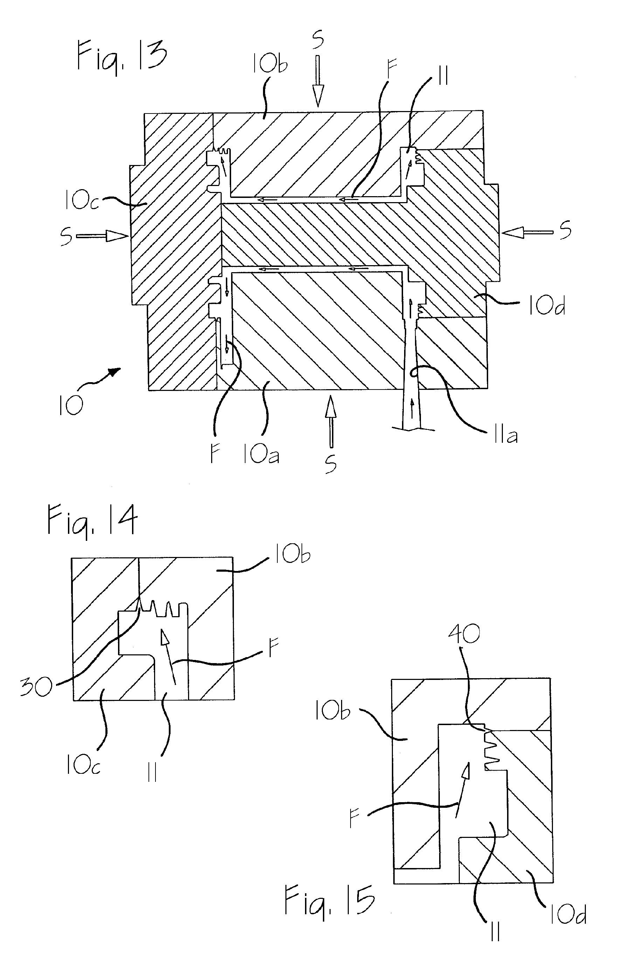

Figures 14 and 15 show the details of part of the impression of some of the mobile parts of the mould 10, designed to form the projecting profiles 6 and 7 of the bobbin 2. As may be noted, the mobile parts 10c and 10d are conceived to couple or close with respect to the element 10b, one in a position corresponding to the groove, designated by 30, which is to form the projection 6a, and the other in a position corresponding to the groove, designated by 40, which is to form the projection 7c. In the case exemplified, said grooves 30, 40 are in effect constituted by the union of two inclined surfaces, formed respectively on the elements 10c and 10d, on the one hand, and 10b on the other.

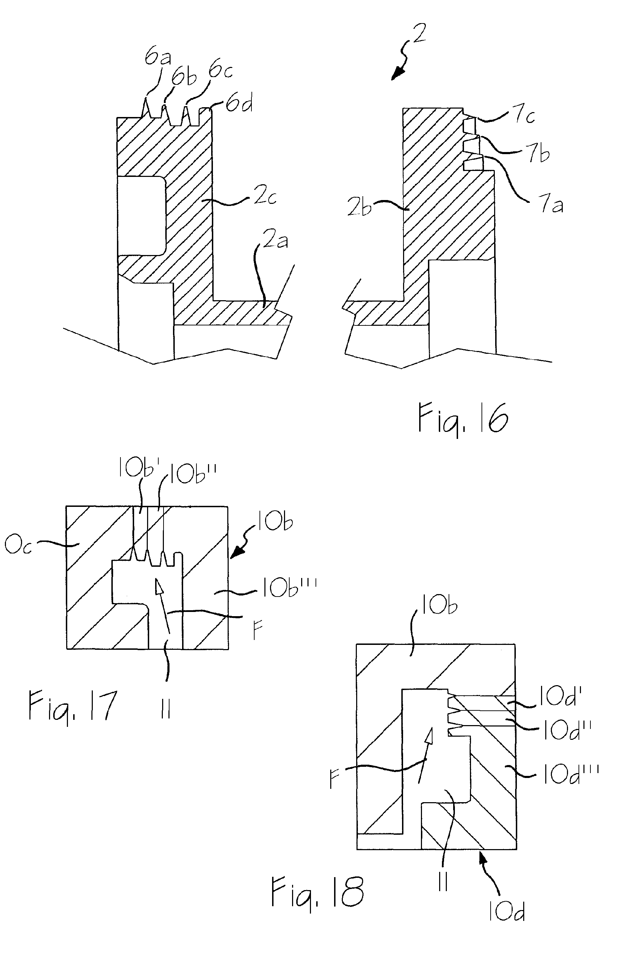

Said solution enables a perfectly pointed end of the projections 6a and 7a to be obtained, as may be seen in Figure 16, and hence one that is more readily subject to being melted by the overmoulding material, according to the modalities explained previously.

In this connection, it is emphasized that fabrication of the mould 20 according to the embodiments represented in Figures 7 and 8, however suitable for implementation of the invention, does not enable decidedly pointed or thinned out tips to be obtained. According to the known techniques of fabrication of moulds, incisions or grooves of the same type as those visible in Figure 7 are typically obtained with electron-discharge machining or milling processes, a fact that has as a consequence that the bottom of the groove, or negative mould, typically presents an albeit minimal radius of curvature or rounding, i.e., an albeit minimal thickness. Said rounding and/or thickness of the tip is more accentuated or evident in the case of products of small dimensions, such as the device forming the subject of the present invention.

It should be noted that in electron-discharge machining (EDM), typically used for the formation of negative shapes on parts of mould, it is necessary to have an electrode having the shape in relief or positive shape complementary to the shape that is to be dug or formed in the mould. Although said electrode is originally made with a pointed shape, it inevitably tends to get damaged or wear out over time, following upon EDM operations, in effect creating said rounded end, or in any case an end that is not pointed. Also in the case of said milling operation, i.e., of machining using a tool, it is practically impossible to use pointed tools of small dimensions, in so far as these get damaged and/or wear out rapidly in use, altering the profile of the tool itself and hence the shape that is intended to form.

The solution of the variant illustrated in Figures 13-15, in addition to enabling perfect grooves or pointed cavities to be obtained in the mould 20, also enables exploitation of the presence of possible moulding flashes, i.e., of anomalous leakage into the areas of joining between the parts 10a-10d of the mould, for the purposes of implementation of the present invention. In this connection, it is recalled that items obtained using moulding operations frequently present moulding flashes, i.e., small amounts of material that manage to work their way between two adjacent parts of the mould, for example mobile parts not perfectly closed on account of wear. With an embodiment of the mould 20 of the type as the one represented in Figure 13, any possible moulding flashes in a position corresponding to the tip of at least one of the projections 6a - 6c and 7a - 7c consequently become parts of material of the bobbin 2 that will certainly be re-melted in the course of overmoulding of the coating 4, thus increasing the quality of the process of union and mutual penetration between the parts.

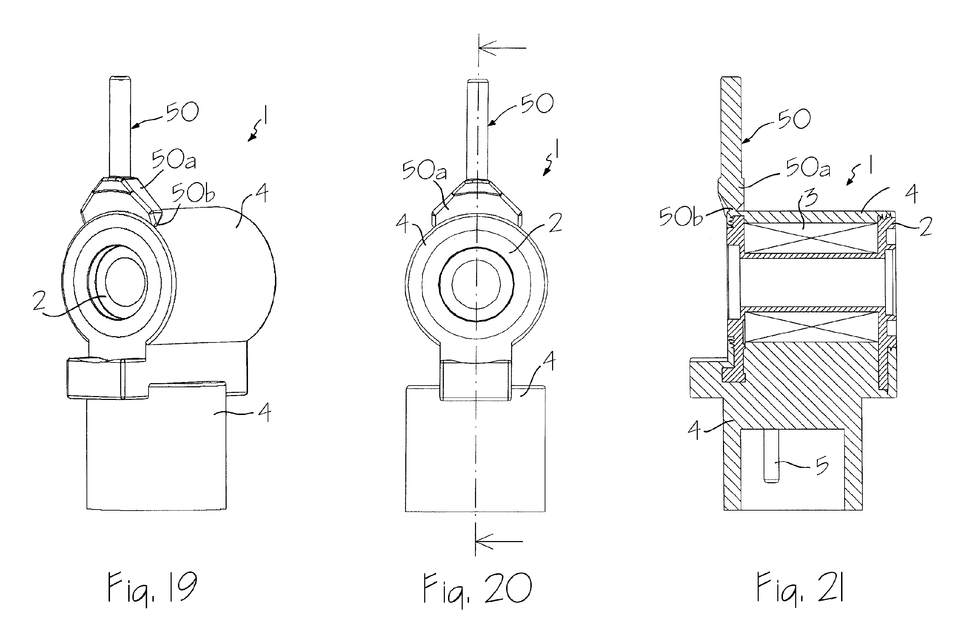

It is pointed out, once again with reference to the variant of Figures 13-15, that the mobile parts 10c and 10d and/or 10b could each comprise a plurality of different elements coupled to one another in a stable way, with means in themselves known, in positions corresponding to the various grooves which are to define the projections 6, 7 in order to obtain pointed profiles at the ends of a number of projections 6a - 6c and 7a - 7c. Such a case is highlighted schematically in Figure 17, where the mobile part 10b comprises three joined elements 10b', 10b" and 10b'", and in Figure 18, where the mobile part 10d comprises three joined elements 10d', 10d" and 10d'". The elements 10b', 10b", 10b'" and 10d', 10d", 10d'" could be constituted by blocks or inserts, i.e., elements fixed to the corresponding part of mobile mould, or else be constituted by mobile carriages, i.e., mobile elements independent of one another and/or of the other mobile parts of the respective mould.

From the above description, the characteristics of the present invention emerge clearly, as likewise do its advantages.

The fact that, according to the invention, the coil is provided with a sealing structure comprising parts that penetrate one another and are fused into one another enables guarantee of hermetic seal between the bobbin 2 and the coating 4, thus enabling a considerable increase in the reliability and safety of the product, even over the long term and in severe working conditions. The fact of envisaging a plurality of parts that penetrate one another and are fused into one another further enables a number of levels of tightness to infiltration to be made available, and hence enables a considerable increase in the reliability of the device over time.

The use of the aforesaid steplike profile enables the projections 6a - 6c and 7a - 7c to be impinged upon immediately and directly by the molten material F' still at the optimal temperature for melting the ends of all said projections, thus enabling a seal without any hidden faults to be obtained, i.e., without any internal areas where the material F' does not manage to melt and seal together the profiles 6 and 7 with the overmoulded coating 4.

The use of similar or in any case compatible thermoplastic materials, in particular PPS, both for the bobbin 2 and for the coating 4 enables optimal chemical and/or mechanical bonding of the re-melted parts to be obtained, such as to guarantee a good level of tightness to any infiltration and resistance to mechanical stresses.

From the production standpoint, the use of PPS, both for the bobbin 2 and for the coating 4, enables all the internal spaces of the moulds, even ones with a thin profile, to be reached and/or filled easily, thus guaranteeing in particular that the molten material F' will reach the peripheral parts at a temperature such as to be able to melt the ends of the profiles 6 and 7. Another advantage of PPS is its low coefficient of expansion, which, during the life of the product, enables reduction to the minimum of any thermal expansion of the co-moulded coil, thus reducing the stresses in the area of adhesion between the material of the bobbin 2 and of the coating 4. The use of PPS likewise enables to guarantee a hermetic seal in environments where resistance to hydrolysis or to chemical attack in general is necessary.

The solution proposed according to the invention then advantageously enables the need for any further operations of sealing of the product to be avoided.

Of course, without prejudice to the principles of the invention, the details and materials of construction and the embodiments may vary with respect to what is described and illustrated herein. In addition, the individual items described above may be produced or made with any other known technique and may in part be omitted, or else be present in a different number and with a different arrangement, in pursuing the purposes of the present invention.

The invention may obviously be implemented combining with one another at least part of the teachings described with reference to the various figures or variants provided previously by way of non-limiting example.

The thermoplastic material used for formation of the bobbin 2, or at least of the parts thereof that integrate the projecting profiles 6 and 7, may be of types different from the type used for forming the coating 4, but in any case compatible therewith for the purposes of implementation of the invention as described previously. In this perspective, it is pointed out that materials that have yielded results that are from many standpoints comparable to PPS are some special formulations of PA66 (polyamide 6-6) and of PA6-12 (polyamide 6-12) with the addition of additives that facilitate adhesion between the material of the bobbin 2 and the material of the coating 4 for use of the coil in working environments at temperatures not higher than approximately 130°C.

In order to speed up the flow of the overmoulding material F' within the mould 20 and reduce its cooling, the duct 21a for injection of said material can be of the so-called "fan-like" or flared type, i.e., it can preferably have a first somewhat thin and widened section, i.e., with a first dimension (or width) of the duct 21a clearly larger than a second dimension (or height) of the duct itself.

For this purpose, Figures 19-21 represent a coil 1 according to the invention, obtained using a mould provided with an injection duct of the aforesaid type, for example located in a position different from that of the bobbin 2, or housed in a different portion of mould from the one described with reference to the injection duct 21a. In said figures, reference numbers that are the same as those of the previous figures are used to indicate elements that are technically equivalent to the ones already described previously.

In said figures, 50 designates the so-called "sprue", i.e., the part or slug of thermoplastic material that solidifies in the aforesaid injection duct, which frequently remains attached to the moulded piece, then to be subsequently removed, detached and discarded. The outer profile of the sprue 50 has a shape complementary to that of the injection duct of the mould, herein not represented for reasons of simplicity. It is in any case to be considered that said mould is made in a substantially similar way to the mould 20 of Figures 9 and 12, except, as has been said, as regards the section of the duct for injection of the material and positioning of the latter. In this connection, it may be noted in fact that in the case of the mould 20 of Figures 9 and 12, the injection duct 21a terminates substantially in a position corresponding to the part of the cavity 21 of the mould 20 which is to form the portion of coating 4 that surrounds the terminals 5. In the case of the variant proposed, the injection duct will terminate, instead, in the area of the cavity close to one of the flanges of the bobbin 2, and in particular the flange 2b.

As may be understood from the shape of the sprue 50, the injection duct comprises a section which is relatively wide in its terminal stretch (i.e., the one that determines the shape of the portion designated by 50a of the sprue 50), both in terms of thickness and in terms of width, being preferably shaped so as to form or be distributed over an arc or over a part of the circular surface of the coil 1. The section of the end of the duct then decidedly thins out, in the proximity of the piece, to form an area 50b for convenient detachment of the sprue 50. Otherwise, in fact, if the point of connection to the piece has a large thickness, breaking of the sprue in order to separate it from the finished piece would prove difficult, and the breaking point would have a wide irregular surface.

In the present variant, the sprue 50, and hence the injection duct that forms it, are located in a position corresponding to an area of overmoulding 4 of small thickness and/or in the proximity of at least one of the aforesaid areas of seal including the projections 6a - 6c or 7a - 7c. The location is moreover such as to enable a flow of material F' to be obtained in the direction previously indicated with respect to the progressively increasing heights of the projections (i.e., with the flow that encounters first the lowest projection, then the subsequent ones, which are progressively higher).

As explained previously, the projections 6a-6c, 7a-7c can be arranged according to a substantially regular series, and/or substantially parallel to one another, and/or on planes substantially parallel to one another, and/or substantially equidistant from one another, and/or substantially concentric with respect to one another. One or more of said projections 6a-6c, 7a-7c is configured with an at least partially annular or closed-path shape, or in any case is configured in such a way as to surround at least in part a respective area of the bobbin 2 in which a seal is to be formed.

## Claims

1. A process for manufacturing an electric coil (1) having at least:
- a bobbin (2);
- an electric winding (3) arranged on the bobbin (2) ;
- a coating (4) overmoulded on the winding (3) and at least part of the bobbin (2),
said part of the bobbin (2) being formed with a first material (F) that defines at least one profile (6, 7) comprising a plurality of projections set at intervals apart from one another (6a-6c, 7a-7c), said coating (4) being formed with a second material (F'), the process comprising the steps of:
i) arranging the bobbin (2) provided with the electric winding (3) in a mould (20);
ii) injecting into the mould (20) the second material (F'), which is to constitute said coating (4) ;
said process being **characterized in that**, in the course of step ii), said second material (F') is injected into the mould at a temperature such as to determine local melting of the first material (F) at end portions of thin configuration of respective projections (6a-6c, 7a-7c), with consequent local amalgamation of the first material (F') with the second material (F) in at least part of the area of said profile (6, 7).

2. The process according to Claim 1, **characterized in that** said projections (6a-6c, 7a-7c) have, within said profile (6, 7), a steplike pattern; i.e., they are made in such a way that the respective end portions of thin configuration lie at different heights from one another.

3. The process according to Claim 1 or Claim 2, **characterized in that** the end portions of thin configuration of said projections (6a-6c, 7a-7c) lie at progressively increasing heights according to a direction followed by a flow of the second material (F') within a cavity (21) of said mould (20), or the direction according to which the projections (6a-6c, 7a-7c) are impinged upon in sequence by said flow in said cavity (21).

4. The process according to Claim 1 or Claim 2, **characterized in that** residual parts of said projections (6a-6c, 7a-7c) are not subjected to said local melting, namely:
- for forming a labyrinth-seal path together with part of the second material (F') which works its way into spaces that separate the projections themselves from one another within said profile (6, 7); and/or
- in such a way that said projections (6a-6c, 7a-7c) create areas of seal formed in part via said local amalgamation of the first material (F') with the second material (F) and in part via a substantially labyrinthine path constituted by said residual parts.

5. The process according to Claim 1, **characterized in that** said projections (6a-6c, 7a-7c) are formed with a substantially tapered section, with a respective tip area that forms said end portion of thin configuration.

6. The process according to Claim 1, **characterized in that** at least one of said first and second materials (F, F') is selected from among polyphenylene sulphide (PPS), polyamide 6-6 (PA66), polyamide 6-12 (PA6-12) with the possible addition of additives.

7. The process according to Claim 1, **characterized in that** said first material (F) and said second material (F') are of the same type, such as polyphenylene sulphide (PPS), or are compatible with one another, or designed to fuse and/or amalgamate with one another to form a seal.

8. The process according to Claim 1, **characterized in that** said mould (20) is thermally conditioned prior to injection of said second material (F'), in particular via pre-heating in order to enable the second material (F') to reach, in the course of the respective injection, a said profile (6, 7) with a temperature such as to bring about said local melting.

9. The process according to Claim 1, **characterized in that** said part of the bobbin (2) comprises at least one end portion (2b, 2c) provided with a said profile (6, 7).

10. The process according to Claim 1, **characterized in that** the bobbin (2) comprises at least one housing portion (2a) which is arranged to receive said winding (3) and at least one flange portion (2b, 2c), the flange portion (2b, 2c) having an internal face and an external face substantially parallel to one another, as well as a peripheral edge, where in particular a said profile (7) is formed on at least one between the external face of said flange portion (2b, 2c) and the peripheral edge of said flange portion (2c).

11. The process according to Claim 1, **characterized in that** said end portions of thin configuration have a respective rounded, or narrow, or pointed terminal part, where in particular said terminal part of a respective projection (6a-6c, 7a-7c) has a radius or a width smaller than 0.2 mm, preferably smaller than 0.06 mm.

12. The process according to Claim 1, **characterized in that** the height of said projections (6a-6c, 7a-7c) is comprised between 10% and 90%, preferably between 30% and 70%, of the thickness of said coating (4) overmoulded in the respective area corresponding to said profile (6, 7).

13. The process, according to Claim 1, **characterized in that** said end portions of thin configuration comprise at least one moulding flash present in a position corresponding to a respective projection (6a-6c, 7a-7c).

14. Moulding equipment for fabrication of the bobbin (2) used in the process according to one or more of Claims 1 to 13, the equipment (10) comprising a plurality of mobile parts (10a-10d) that have respective impressions, conformed to define as a whole a common cavity (11), when closed with respect to one another in a working position, the impression of one or more of said mobile parts (10a-10d) comprising one or more recesses or grooves of a shape substantially complementary to that of said projections (6a-6c, 7a-7c) to be obtained.

15. The equipment according to Claim 14, **characterized in that**:
- in said working position, at least two of said mobile parts (10a, 10c; 10a, 10d ; 10b, 10c; 10b, 10d) co-operate with one another in a position corresponding to a said recess (30, 40), and/or
- at least one of said mobile parts (10a , 10b, 10c, 10d) defines a plurality of said recesses and comprises, or co-operates with, a plurality of different elements (10b'-10b'", 10d'-10d'") coupled to one another in a position corresponding to a respective recess, and/or
- fixed to at least one of said mobile parts (10a , 10b, 10c, 10d) is at least one further element (10b'-10b'", 10d'-10d'"), the further element being preferably coupled to the respective mobile part (10a , 10b, 10c, 10d) in a position corresponding to a said recess.

16. Moulding equipment for implementation of step ii) of the process according to one or more of Claims 1 to 13, the equipment (20) comprising a plurality of mobile parts (20a-20d) that have respective impressions, conformed to define, as a whole, a common cavity (21), when closed with respect to one another in a working position, the impression of one or more of said mobile parts (20a-20d) comprising one or more recesses or grooves having a shape substantially complementary to that of said overmoulded coating (4) to be obtained and/or of a part of the bobbin (2) and/or of another part of the coil (1) to be made.

17. The equipment according to Claim 16, **characterized in that** it comprises a respective injection duct (21a) for injection of the second material (F'), having a first thin or narrow section in an area of connection between the duct itself and said cavity (21), said first section having, in particular, a first dimension or width clearly larger than a second dimension or height.

18. The equipment according to Claim 17, **characterized in that** said injection duct (21a) comprises a second relatively wide section in both of said first and second dimensions, said second section being preferably located in the proximity of said area of connection.

19. The equipment according to Claim 16, **characterized in that** the section of said duct (21a) has at least one arc-shaped stretch.

20. The equipment according to Claim 16, **characterized in that** it comprises a respective injection duct (21a) and **in that** at least one of said common cavity (21) and said injection duct (21a) is configured for bringing about a flow of the second material (F') with a pre-determined direction with respect to the areas in which the said profile or said profiles (6, 7) of the bobbin (2) lies or lie.

21. A bobbin for an electric coil (1), of the type which is to support an electric winding (3) and is provided with a coating (4) overmoulded (F') on the winding (3) and on at least one portion of the bobbin itself, said portion of the bobbin (2) having at least one profile (6, 7) comprising a plurality of projections set at intervals apart from one another (6a-6c, 7a-7c) to form an area of seal, **characterized in that** said projections (6a-6c, 7a-7c) comprise a respective end portion configured for being re-melted when impinged upon by material (F') at high temperature which is to constitute said coating (4).

22. The bobbin according to Claim 21, **characterized in that** said end portion comprises a moulding flash.

23. An electric coil comprising:
- a bobbin (2), on which an electric winding (3) is arranged; and
- a coating (4) overmoulded on the winding (3) and at least one portion of the bobbin (2), said portion of the bobbin being formed with a first material (F) and said coating (4) comprising a second material (F'),
where provided between said portion of the bobbin (2) and a respective portion of the coating (4) is at least one area of seal, formed by a profile (6, 7) of the bobbin (2) having a plurality of projections set at intervals apart from one another (6a-6c, 7a-7c) and by part of the second material (F') that has worked its way into spaces that separate said projections from one another within said profile (6, 7),
said electric coil being **characterized in that** said area of seal further comprises part of the second material (F), which has amalgamated, following upon its re-melting, with part of the first material (F'), where, in particular, the second material (F) has amalgamated, following upon its re-melting, with part of the first material (F') in positions corresponding to said projections (6a-6c, 7a-7c).

24. A coil and/or a bobbin made using the process according to one or more of Claims 1 to 13 and/or via the equipment according to one or more of Claims 14 to 20.
